# EUROPÄISCHE PATENTSCHRIFT

(11) **EP 1 371 529 B1**
(45) Veröffentlichungstag und Bekanntmachung des Hinweises auf die Patenterteilung: **02.06.2010**
(21) Anmeldenummer: 03011232.0
(22) Anmeldetag: 16.05.2003
(51) Int. Cl.: B60R 22/195

(54) **Vorrichtung zum Straffen eines Sicherheitsgurtes**
Device for tensioning a seat belt
Dispositif pour tendre une ceinture de sécurité

(30) Priorität: 14.06.2002 DE 20209284 U
(43) Veröffentlichungstag der Anmeldung: 17.12.2003
(73) Patentinhaber: KEY SAFETY SYSTEMS, INC., Sterling Heights, MI 48314 (US)
(72) Erfinder: Specht, Martin, 82234 Feldafing (DE)
(74) Vertreter: Nöth, Heinz

(56) Entgegenhaltungen:
- DE-A- 19 720 206
- US-A- 5 519 997
- US-A- 5 908 222
- US-B1- 6 357 795

## Beschreibung

Die Erfindung betrifft eine Vorrichtung zum Straffen eines Sicherheitsgurtes nach dem Oberbegriff des Patentanspruches 1. Eine derartige aus DE 296 19 838 U1 bekannte Vorrichtung beinhaltet zum Straffen eines Sicherheitsgurtes ein längs einer Achse von einem Strafferantrieb angetriebenes Zugmittel, von welchem ein Zugmittelabschnitt in einer Umlenkeinrichtung aus der Richtung der Achse ausgelenkt wird. Ferner ist ein Verbindungsmittel vorgesehen, mit welchem das Zugmittel mit dem Sicherheitsgurt zu verbinden ist. Bei der bekannten Vorrichtung beinhaltet die Umlenkeinrichtung einen plattenförmig ausgebildeten Hauptkörper, welcher die Auslenkung des Zugmittelabschnittes aus der Richtung der Achse des vom Strafferantrieb angetriebenen Zugmittels bewirkt. Hierbei wird eine Auslenkung in nur einer die Achse durchsetzenden Ebene erreicht. Die Befestigung am Fahrzeugkörper erfolgt mit Hilfe nicht näher dargestellter Mittel.

Aus EP 06 85 372 A1 ist eine Vorrichtung zum Straffen eines Sicherheitsgurtes bekannt, bei welchem das von einem Strafferantrieb angetriebene Zugmittel mit Hilfe eines flexiblen Schlauches der mit einem Gurtschlossgehäuse verbunden ist, umgelenkt wird. Beim Anlegen des Sicherheitsgurtes und Einstecken der Steckzunge des Sicherheitsgurtes in das Gurtschloss wird der flexible Schlauch und der darin als Zugmittel geführte Draht als Zugmittel entsprechend ausgelenkt. Die Befestigung des Strafferantriebs am Fahrzeugaufbau ist im Einzelnen nicht erläutert.

Eine aus US-A-5,519,997 bekannte Vorrichtung besitzt einen als Linearantrieb ausgebildeten Strafferantrieb, welcher ein Zugmittel antreibt. Mit dem Zugmittel ist ein Gurtschloss verbunden, in das die Steckzunge eines Fahrzeugsicherheitsgurtes eingesteckt werden kann. Das Zugmittel, welches als Zugseil ausgebildet ist, wird durch eine Umlenkeinrichtung geführt, welche das Zugseil aus der Richtung einer Strafferantriebsachse (Strafferantriebsrichtung) in einer bestimmten Ebene auslenkt. Hierdurch wird erreicht, dass die Becken- und Schultergurtteile des Sicherheitsgurtes, mit denen bei angelegtem Sicherheitsgurt das Gurtschloss verbunden ist, in eine gewünschte Richtung gestrammt werden.

Aufgabe der Erfindung ist es, eine Vorrichtung der eingangs genannten Art zu schaffen, die in einem Kraftfahrzeug zum Straffen eines Sicherheitsgurtes universell an unterschiedlichen Einbauorten des Kraftfahrzeugs eingesetzt werden kann.

Diese Aufgabe wird erfindungsgemäß durch die Merkmale des Patentanspruches 1 gelöst.

Die Erfindung zeichnet sich dadurch aus, dass der ausgelenkte Zugmittelabschnitt in einer ersten Ebene und in einer dazu senkrechten zweiten Ebene gegenüber der Achse, entlang welcher auf das Zugmittel vom Strafferantrieb ein Zug ausgeübt wird, durch die Umlenkeinrichtung abgewinkelt geführt wird. Die beiden aufeinander senkrecht stehenden Ebenen schneiden sich dabei in der Achse, längs welcher die Strafferantriebsrichtung verläuft. Ferner wird der ausgelenkte Zugmittelabschnitt in einer dritten zu den beiden erstgenannten Ebenen senkrechten Ebene gegenüber diesen beiden Ebenen abgewinkelt geführt. Die Umlenkeinrichtung lenkt das Zugmittel, insbesondere Zugseil, nicht nur innerhalb einer Ebene ab, sondern schafft eine räumliche Umlenkung des Zugseiles gegenüber der Achse, entlang welcher auf das Zugmittel vom Strafferantrieb ein Zug ausgeübt wird. Hierdurch erreicht man eine erhebliche Erweiterung der Einbaumöglichkeiten des Strafferantriebs im Kraftfahrzeug. Ferner kann der Einbau so erfolgen, dass das Zugmittel nicht nur mit dem Gurtschloss des Sicherheitsgurtes verbunden ist, sondern die vom Zugmittel vermittelte Zugkraft an geeigneten Gurtbandstellen des Sicherheitsgurtes, beispielsweise zwischen dem Gurtaufroller und einer Umlenkeinrichtung, beispielsweise der in Schulterhöhe des Fahrzeuginsassen vorgesehenen Umlenkeinrichtung angreifen kann. Ferner kann die Straffervorrichtung als Endbeschlagstraffer, insbesondere an den Rückbanksitzen, zum Einsatz kommen. Der Einbau der Straffereinrichtung im Fahrzeug ist auch an solchen Stellen möglich, an denen feste Einbauten vorhanden sind, um welche mittels der Umlenkeinrichtung das Zugmittel, insbesondere Zugseil, zwischen dem Strafferantrieb und der gewünschten Angriffsstelle am Sicherheitsgurt umgelenkt bzw. geführt wird.

Vorzugsweise kommt ein Linearstraffer als Strafferantrieb zur Anwendung. Es ist jedoch auch möglich, andere Strafferantriebe, beispielsweise rotatorische Strafferantriebe mit der Umlenkeinrichtung zu kombinieren.

### [Beispiele]

Anhand der Figuren wird an Ausführungsbeispielen die Erfindung noch näher erläutert.

Es zeigt
- Fig. 1: in Seitenansicht (xy-Ebene) ein Ausführungsbeispiel der Erfindung;
- Fig. 2: eine Draufsicht (xz-Ebene) auf das Ausführungsbeispiel der Fig. 1; und
- Fig. 3: eine Vorderansicht (yz-Ebene) des Ausführungsbeispiels.

Das in den Figuren dargestellte Ausführungsbeispiel besitzt einen Strafferantrieb 6, der als Linearstrafferantrieb ausgebildet ist. Dieser Strafferantrieb kann so ausgebildet sein, wie er aus der US 5,519,997 bekannt ist, oder einen ähnlichen Aufbau haben. Demnach besteht der Strafferantrieb 6 aus einem Führungsrohr, in welchem ein Kolben mittels eines beispielsweise pyrotechnischen Antriebsmittels entlang einer Achse 3 angetrieben wird. Mit dem Kolben ist ein Zugmittel, beispielsweise in Form eines Zugseils, das einen Strang oder zwei Stränge oder auch mehr Stränge aufweisen kann, fest verbunden. Von diesem Strafferantrieb wird ein Zugmittelabschnitt 1 im wesentlichen entlang der Achse 3 in Strafferantriebsrichtung 10 angetrieben. Der Zugmittelabschnitt 1 ist fest mit dem nicht näher dargestellten Kolben des Strafferantriebs 6 verbunden.

Anstelle des Linearstrafferantriebs kann auch ein rotatorischer Strafferantrieb vorgesehen sein, welcher entlang einer der Achse 3 entsprechenden Achse den Zugmittelabschnitt 1 bewegt bzw. einen Zug auf diesen Zugmittelabschnitt 1 ausübt.

Das Zugmittel wird durch eine Umlenkeinrichtung 4 geführt und, wie im einzelnen erläutert wird, aus der Zugrichtung (Strafferantriebsrichtung 10), welche entlang der Achse 3 verläuft, ausgelenkt. An einem ausgelenkten Zugmittelabschnitt 2 befindet sich ein Verbindungsmittel 5, beispielsweise in Form einer Öse. Mit dem Verbindungsmittel 5 kann ein Gurtbandteil des nicht näher dargestellten Sicherheitsgurtes, beispielsweise im Bereich eines Endbeschlages des Sicherheitsgurtes oder zwischen dem Gurtaufroller und einem Umlenkbeschlag, welche insbesondere in Schulterhöhe eines Fahrzeuginsassen liegt, in Eingriff gebracht werden.

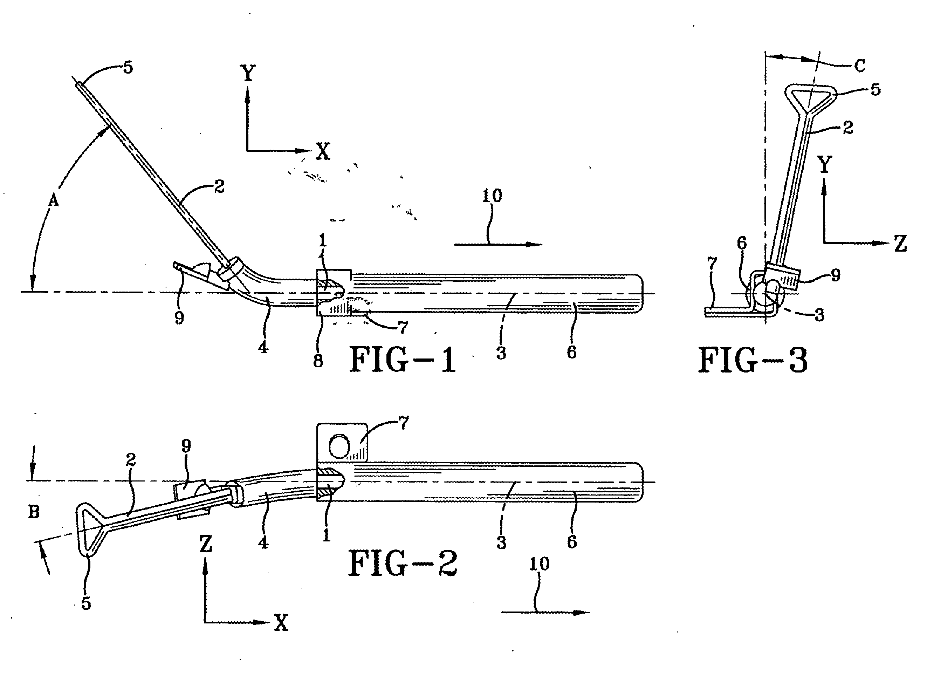

Durch die Umlenkeinrichtung 4 wird das Zugmittel in drei Raumkoordinaten abgelenkt, wie im einzelnen erläutert wird. Die Fig. 1 zeigt die Auslenkung des Zugmittelabschnittes 2 gegenüber dem Zugmittelabschnitt 1 in einer xy-Ebene, welche durch die Achse 3 verläuft. In der Fig. 1 ist der Führungszylinder bzw. das Gehäuse des Strafferantriebs 6 teilweise geöffnet, so dass der Verlauf des Zugmittelabschnittes 1 entlang der Achse 3 sichtbar ist. Auch in der Fig. 2 ist der aus der Umlenkeinrichtung 4 in den Strafferantrieb 6 geführte Zugmittelabschnitt 1 durch das teilweise aufgebrochene Gehäuse sichtbar.

In der xy-Ebene der Fig. 1 wird der aus dem anderen Ende der Umlenkeinrichtung 4 herausgeführte und ausgelenkte Zugmittelabschnitt 2 um einen Winkel A gegenüber der Achse 3 ausgelenkt. Dieser Winkel kann je nach Einbauerfordernissen zwischen 40° und 60° betragen. Vorzugsweise beträgt der Winkel A 45° bis 55° und hat beim Ausführungsbeispiel einen Wert zwischen 49° und 50°.

Gemäß Fig. 2 erfolgt die Auslenkung des Zugmittelabschnittes 2 gegenüber der Achse 3 um einen Winkel B in einer zur xy-Ebene senkrechten xz-Ebene. Die beiden Ebenen xy und xz schneiden sich im rechten Winkel in der Achse 3, wie aus der Fig. 3 zu ersehen ist. Der Winkel B ist kleiner als der Winkel A. Er ist insbesondere kleiner als 20° und liegt beim dargestellten Ausführungsbeispiel zwischen 13° und 14°.

Gemäß Fig. 3 wird der ausgelenkte Zugmittelabschnitt 2 gegenüber den beiden Ebenen (xy) und (xz) innerhalb eines Winkelbereiches von 90° ausgelenkt.

Gegenüber der xy-Ebene liegt der Auslenkwinkel C des dargestellten Ausführungsbeispiels zwischen 11° und 12°. Diese Auslenkung erfolgt in einer dritten Ebene (yz-Ebene), die senkrecht zu den beiden anderen Ebenen (xy) und (xz) liegt.

Beim dargestellten Ausführungsbeispiel sind die Auslenkwinkel B und C in den Ebenen der Fig. 2 und 3 kleiner als der Auslenkwinkel A in der Ebene der Fig. 1. Diese Winkel sind insbesondere geringer als 45° und sind vorzugsweise kleiner bemessen als 25°. Durch die so ausgebildete Umlenkeinrichtung 4 ist eine einwandfreie Führung des Zugmittels in der Umlenkeinrichtung 4 gewährleistet. Ferner ist gewährleistet, dass ohne Veränderung von festen Einbauten des Fahrzeugs die Straffereinrichtung in geeigneter Weise gegenüber dem Gurtbandteil, an welchem die Zugkraft des Strafferantriebs 6 angreifen soll, positioniert werden kann.

Das dargestellte Ausführungsbeispiel besitzt an der Verbindungsstelle zwischen dem Strafferantrieb 6 und der Umlenkeinrichtung 4 ein Befestigungsmittel in Form einer Befestigungslasche 7. Die Befestigungslasche 7 kann beispielsweise mit Hilfe einer Schraubenverbindung am Fahrzeugaufbau verankert werden. An der Befestigungslasche 7 ist eine ebene Fläche 8 vorgesehen, mit welcher die Befestigungslasche 7 an einem Teil des Fahrzeugaufbaus anliegt.

Vorzugsweise ist die Anordnung der ebenen Fläche 8 so, dass der größte Auslenkwinkel der drei räumlichen Auslenkwinkel in einer zu der ebenen Fläche 8 senkrechten Ebene, welche durch die Achse 3 geht, liegt. Beim dargestellten Ausführungsbeispiel handelt es sich um die xy-Ebene der Fig. 1, in welcher der Auslenkwinkel A liegt. Mit der Befestigungslasche 7 kann gleichzeitig der Strafferantrieb 6 am Fahrzeugaufbau verankert werden. Ferner kann zusätzlich eine weitere Abstützeinrichtung am anderen Ende der Umlenkvorrichtung vorgesehen sein. Diese kann als Befestigungslasche 9, welche ebenfalls am Fahrzeugaufbau befestigt werden kann, oder als lose Stützeinrichtung, welche am Fahrzeugaufbau abgestützt wird, ausgebildet sein. Es ist auch möglich, die zusätzliche Befestigungslasche 9 so auszubilden, dass sie mit Formschluss an einem entsprechenden Teil des Fahrzeugaufbaus verankert ist.

### [Bezugszeichenliste]

- 1: in Strafferantriebsrichtung geführter Zugmittelabschnitt
- 2: ausgelenkter Zugmittelabschnitt
- 3: Achse
- 4: Umlenkeinrichtung
- 5: Verbindungsmittel
- 6: Strafferantrieb
- 7: Befestigungslasche
- 8: ebene Fläche an der Befestigungslasche 7
- 9: weitere Befestigungslasche
- 10: Strafferantriebsrichtung

## Patentansprüche

1. Vorrichtung zum Straffen eines Sicherheitsgurtes mit
- einem längs einer Achse (3) von einem Strafferantrieb (6) angetriebenen Zugmittel (1, 2);
- einer Umlenkeinrichtung (4), welche einen Zugmittelabschnitt (2) aus der Zugrichtung längs der Achse (3) auslenkt;
- einem Verbindungsmittel (5), mit welchem das Zugmittel (1,2) mit dem Sicherheitsgurt verbindbar ist; und
- mit wenigstens einem Befestigungsmittel (7), mit welchem die Umlenkeinrichtung (4) fest mit dem Fahrzeugaufbau zu verbinden ist;
- **dadurch gekennzeichnet, dass**
- die Umlenkeinrichtung (4) ausgebildet ist, den Zugmittelabschnitt (2) in drei Raumkoordinaten gegenüber der Achse (3) auszulenken;
- wobei der Zugmittelabschnitt (2) in einer ersten Ebene (xy) und in einer zweiten dazu senkrechten Ebene (xz), welche sich in der Achse (3) schneiden, gegenüber der Achse (3) und ferner in einer zu der ersten und der zweiten Ebene senkrechten dritten Ebene (yz) gegenüber der ersten und zweiten Ebene in bestimmten Auslenkwinkeln (A, B, C) ausgelenkt ist, wobei der Auslenkwinkel (A) gegenüber der Zugrichtung längs der Achse (3) in der ersten Ebene (xy) von 40° bis 60° beträgt und der Auslenkwinkel (B) gegenüber der Zugrichtung längs der Achse (3) in der zweiten Ebene (xz) und der Auslenkwinkel (C) in der dritten Ebene (yz) gegenüber der ersten Ebene (xy) geringer als 45° sind;
- das wenigstens ein Befestigungsmittel (7) eine ebene Fläche (8) aufweist, die parallel zur Achse (3) verläuft; und
- die erste Ebene (xy), in welcher der größte der drei Auslenkwinkel liegt, senkrecht zur ebenen Fläche (8) am Befestigungsmittel (7) verläuft.

2. Vorrichtung nach Anspruch 1,
**dadurch gekennzeichnet, dass** die Auslenkwinkel (B, C) in der zweiten Ebene (xz) und der dritten Ebene (yz) geringer als 25° sind.

3. Vorrichtung nach Anspruch 1 oder 2,
**dadurch gekennzeichnet, dass** der Winkel (A) in der ersten Ebene (xy) zwischen 49° und 50° beträgt, der Winkel (B) in der zweiten Ebene (xz) zwischen 13° und 14° liegt und der Auslenkwinkel (C) gegenüber einer der beiden anderen Ebenen (xy, xz) in der dritten Ebene (yz) zwischen 11° und 12° liegt.

4. Vorrichtung nach einem der Ansprüche 1 bis 3,
**dadurch gekennzeichnet, dass** der Strafferantrieb (6) als Linearstrafferantrieb ausgebildet ist.

5. Vorrichtung nach einem der Ansprüche 1 bis 4,
**dadurch gekennzeichnet, dass** an wenigstens einem der beiden Enden der Umlenkeinrichtung (4) Befestigungsmittel 7 bis 9) vorgesehen sind.

6. Vorrichtung nach einem der Ansprüche 1 bis 5,
**dadurch gekennzeichnet, dass** das Verbindungsmittel (5) im Bereich des Endbeschlages mit dem Sicherheitsgurt verbindbar ist.

## Claims

1. Device for tensioning a seat belt, comprising
- traction means (1, 2) driven by a tensioning drive (6) along an axis (3);
- a deflection device (4) which deflects a section (2) of the traction means away from the direction of traction along the axis (3);
- connection means (5), with which the traction means (1, 2) can be connected with the seat belt; and
- at least one fastening means (7), with which the deflection device (4) may be securely connected to the vehicle structure;
**characterised in that**
- the deflection device (4) is designed to deflect the traction means section (2) in three spatial coordinates relative to the axis (3);
- wherein the traction means section (2) is deflected in a first plane (xy) and in a second plane (xz) perpendicular thereto, these intersecting at the axis (3), relative to the axis (3), and additionally in a third plane (yz), perpendicular to the first and second planes, relative to the first and second planes by defined deflection angles (A, B, C), wherein the deflection angle (A) in the first plane (xy) relative to the traction direction along the axis (3) amounts to from 40° to 60° and the deflection angle (B) in the second plane (xz) relative to the traction direction along the axis (3) and the deflection angle (C) in the third plane (yz) relative to the first plane (xy) are less than 45°;
- the at least one fastening means (7) has a planar surface (8), which extends parallel to the axis (3); and
- the first plane (xy), in which lies the largest of the three deflection angles, extends perpendicular to the planar surface (8) on the fastening means (7).

2. Device according to claim 1, **characterised in that** the deflection angles (B, C) in the second plane (xz) and the third plane (yz) are smaller than 25°.

3. Device according to claim 1 or claim 2, **characterised in that** the angle (A) in the first plane (xy) amounts to between 49° and 50°, the angle (B) in the second plane (xz) amounts to between 13° and 14° and the deflection angle (C) in the third plane (yz) relative to one of the other two planes (xy, xz) amounts to between 11° and 12°.

4. Device according to one of claims 1 to 3, **characterised in that** the tensioning drive (6) is designed as a linear tensioning drive.

5. Device according to one of claims 1 to 4, **characterised in that** fastening means (7 to 9) are provided at at least one of the two ends of the deflection device (4).

6. Device according to one of claims 1 to 5, **characterised in that** the connection means (5) can be connected to the seat belt in the region of the end fitting.

## Revendications

1. Dispositif pour tendre une ceinture de sécurité, comprenant
- un moyen de traction (1, 2) commandé par un entraînement de prétensionneur (6) le long d'un axe (3);
- un dispositif de déviation (4) qui dévie une portion de moyen de traction (2) de la direction de traction le long de l'axe (3);
- un moyen de liaison (5) grâce auquel le moyen de traction (1, 2) peut être relié à la ceinture de sécurité; et
- comprenant au moins un moyen de fixation (7) grâce auquel le dispositif de déviation (4) doit être relié fixement à la carrosserie du véhicule;
**caractérisé par le fait que** le dispositif de déviation (4) est exécuté pour dévier la portion de moyen de traction (2) dans trois coordonnées spatiales par rapport à l'axe (3);
- la portion de moyen de traction (2) étant déviée, par rapport à l'axe (3), dans un premier plan (xy) et dans un deuxième plan (xz) perpendiculaire à celui-ci, qui se coupent au niveau de l'axe (3), et étant déviée, en outre, dans un troisième plan (yz) perpendiculaire au premier et au deuxième plans, selon des angles de déviation déterminés (A, B, C) par rapport au premier et au deuxième plans, l'angle de déviation (A) par rapport à la direction de traction le long de l'axe (3) dans le premier plan (xy) mesurant entre 40° et 60° et l'angle de déviation (B) par rapport à la direction de traction de long de l'axe (3) dans le deuxième plan (xz) et l'angle de déviation (C) dans le troisième plan (yz) par rapport au premier plan (xy) mesurant moins de 45°;
- le au moins un moyen de fixation (7) est pourvu d'une surface plane (8) qui s'étend parallèlement à l'axe (3); et
- le premier plan (xy), dans lequel se situe le plus grand des trois angles de déviation, est perpendiculaire à la surface plane (8) du moyen de fixation (7).

2. Dispositif selon la revendication 1,
**caractérisé par le fait que** les angles de déviation (B, C) dans le deuxième plan (xz) et dans le troisième plan (yz) mesurent moins de 25°.

3. Dispositif selon la revendication 1 ou 2,
**caractérisé par le fait que** l'angle (A) dans le premier plan (xy) mesure entre 49° et 50°, l'angle (B) dans le deuxième plan (xz) mesure entre 13° et 14° et l'angle de déviation (C) par rapport à un des deux autres plans (xy, xz) dans le troisième plan (yz) mesure entre 11° et 12°.

4. Dispositif selon l'une des revendications 1 à 3,
**caractérisé par le fait que** l'entraînement de prétensionneur (6) est exécuté en tant qu'entraînement de prétensionneur linéaire.

5. Dispositif selon l'une des revendications 1 à 4,
**caractérisé par le fait que** des moyens de fixation (7 à 9) sont prévus au moins à l'une des deux extrémités du dispositif de déviation (4).

6. Dispositif selon l'une des revendications 1 à 5,
**caractérisé par le fait que** le moyen de liaison (5) peut être relié à la ceinture de sécurité dans la zone de la ferrure d'extrémité.
